# EUROPEAN PATENT SPECIFICATION

(11) **EP 4 302 295 B1**
(45) Date of publication and mention of the grant of the patent: **24.12.2025**
(21) Application number: 21716000.1
(22) Date of filing: 05.03.2021
(51) Int. Cl.: G10L 21/02, G06N 3/02, G06N 3/08, G10L 19/04, G06N 3/045, G06N 20/00

(54) **MACHINE LEARNING BASED ENHANCEMENT OF AUDIO FOR A VOICE CALL**
AUF MASCHINENLERNEN BASIERENDE VERBESSERUNG VON AUDIO FÜR EINEN SPRACHANRUF
AMÉLIORATION D'AUDIO BASÉE SUR L'APPRENTISSAGE AUTOMATIQUE POUR UN APPEL VOCAL

(43) Date of publication of application: 10.01.2024
(73) Proprietor: Google LLC, Mountain View, CA 94043 (US)
(72) Inventor: OSMAN, Omer Ahmed, Siddig, Mountain View, CA 94043 (US); ROBLEK, Dominik, Mountain View, CA 94043 (US); LI, Yunpeng, Mountain View, CA 94043 (US); TAGLIASACCHI, Marco, Mountain View, CA 94043 (US); RYBAKOV, Oleg, Mountain View, CA 94043 (US); UNGUREANU, Victor, Mountain View, CA 94043 (US); GIGUERE, Eric, Mountain View, CA 94043 (US)
(74) Representative: Chettle, John Edward
(86) International application number: PCT/US2021/021161
(87) International publication number: WO 2022/186838

(56) References cited:
- WILLIARD JOSHUA JOSE: "AMRConvNet: AMR-Coded Speech Enhancement Using Convolutional Neural Networks", ARXIV.ORG, CORNELL UNIVERSITY LIBRARY, 201 OLIN LIBRARY CORNELL UNIVERSITY ITHACA, NY 14853, 24 August 2020 (2020-08-24), XP081746967
- ZHAO ZIYUE ET AL: "Convolutional Neural Networks to Enhance Coded Speech", IEEE/ACM TRANSACTIONS ON AUDIO, SPEECH, AND LANGUAGE PROCESSING, IEEE, USA, vol. 27, no. 4, 1 April 2019 (2019-04-01), pages 663 - 678, XP011714645, ISSN: 2329-9290, [retrieved on 20190311], DOI: 10.1109/TASLP.2018.2887337
- NIKOLAS ADALOGLOU: "Intuitive Explanation of Skip Connections in Deep Learning | AI Summer", 4 March 2021 (2021-03-04), pages 1 - 9, XP055865019, Retrieved from the Internet <URL:https://web.archive.org/web/20210304213643/https://theaisummer.com/skip-connections/> [retrieved on 20211123]
- SUNG KIM ET AL: "Bandwidth Extension on Raw Audio via Generative Adversarial Networks", ARXIV.ORG, CORNELL UNIVERSITY LIBRARY, 201 OLIN LIBRARY CORNELL UNIVERSITY ITHACA, NY 14853, 21 March 2019 (2019-03-21), XP081156348
- CRAIG MACARTNEY ET AL: "Improved Speech Enhancement with the Wave-U-Net", ARXIV.ORG, CORNELL UNIVERSITY LIBRARY, 201 OLIN LIBRARY CORNELL UNIVERSITY ITHACA, NY 14853, 28 November 2018 (2018-11-28), XP080939744

## Description

### BACKGROUND

Many modern mobile phones exchange data over different communications networks with different communication protocols. Data packets transferred over such communications networks are compressed and encoded in a communication protocol in alignment with the transmission network. Upon receipt by a mobile phone, the encoded data packet is decoded, and the compressed audio frame is extracted and decoded, and played back to the user of the mobile phone. In some example embodiments, mobile phone devices include features that may apply post-processing corrections to the extracted audio. After the audio has been corrected, the corrected audio can be saved, transmitted, played, and/or otherwise utilized. Williard Joshua Jose "AMRConvNet: AMR-Coded Speech Enhancement Using Convolutional Neural Networks" presents the application of convolutional neural networks for Artificial Bandwidth Expansion (ABE) and speech enhancement on coded speech, particularly Adaptive Multi-Rate (AMR) used in 2G cellular phone calls, and introduces AMRConvNet, a convolutional neural network that performs ABE and speech enhancement on speech encoded with AMR. Ziyue Zhao et al. "Convolutional Neural Networks to Enhance Coded Speech" presents two postprocessing approaches applying convolutional neural networks (CNNs) either in the time domain or the cepstral domain to enhance the coded speech without any modification of the codecs.

### SUMMARY

It is an object of the invention to overcome the shortcomings in the prior art. This object of the invention is solved by the independent claims. Specific embodiments are defined in the dependent claims. The present disclosure generally relates to enhancement of voice call audio. In one aspect, a mobile phone may be configured to enhance a quality of a call received over a communications network. Powered by a system of machine-learned components, the mobile phone may be configured to enhance audio by restoring losses due to compression and/or decompression over a range of audio features. For example, a reduction in a frequency bandwidth may be restored, quantization in time or frequency of the frequency spectrum can be corrected, noisy background signal may be reduced or eliminated, one or more frequency bands may be re-adjusted, distortions in speech may be corrected, and/or compensations may be made for losses and/or artifacts that may have been introduced into the audio due to the compression process. In some aspects, the techniques described herein compensate for losses due to compression and/or decompression, where the losses are aggregated over multiple audio features instead of being limited to specific audio features, and across multiple compression-decompression algorithms (codecs) instead of being limited to specific codecs.

In some aspects, mobile devices are configured with post-processing features so that audio for a voice call can be enhanced in real-time. The audio is automatically enhanced by the mobile device during a voice call without user intervention. The cellular network may also introduce these features within their network infrastructure. Also, for example, voicemails in a user's voicemail folder can be enhanced based on techniques described herein.

In a first aspect, a computer-implemented method is provided. The method includes receiving, by a computing device and via a communications network interface, a compressed audio data frame, wherein the compressed audio data frame is received after transmission over a communications network. The method further includes decompressing the compressed audio data frame to extract an audio waveform. The method also includes predicting, by applying a neural network to the audio waveform, an enhanced version of the audio waveform, wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder. The method additionally includes providing, by an audio output component of the computing device, the enhanced version of the audio waveform.

In a second aspect, a device is provided. The device includes a communications network interface, an audio output component, and one or more processors operable to perform operations. The operations include receiving, by a computing device and via the communications network interface, a compressed audio data frame, wherein the compressed audio data frame is received after transmission over a communications network. The operations further include decompressing the compressed audio data frame to extract an audio waveform. The operations also include predicting, by applying a neural network to the audio waveform, an enhanced version of the audio waveform, wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder. The operations additionally include providing, by the audio output component of the computing device, the enhanced version of the audio waveform.

In a third aspect, an article of manufacture is provided. The article of manufacture may include a non-transitory computer-readable medium having stored thereon program instructions that, upon execution by one or more processors of a computing device, cause the computing device to carry out operations. The operations include receiving, by a computing device and via a communications network interface, a compressed audio data frame, wherein the compressed audio data frame is received after transmission over a communications network. The operations further include decompressing the compressed audio data frame to extract an audio waveform. The operations also include predicting, by applying a neural network to the audio waveform, an enhanced version of the audio waveform, wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder. The operations additionally include providing, by an audio output component of the computing device, the enhanced version of the audio waveform.

In a fourth aspect, a system is provided. The system includes means for receiving, by a computing device and via a communications network interface, a compressed audio data frame, wherein the compressed audio data frame is received after transmission over a communications network; means for decompressing the compressed audio data frame to extract an audio waveform; means for predicting, by applying a neural network to the audio waveform, an enhanced version of the audio waveform, wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder; and means for providing, by an audio output component of the computing device, the enhanced version of the audio waveform.

Other aspects, embodiments, and implementations will become apparent to those of ordinary skill in the art by reading the following detailed description, with reference where appropriate to the accompanying drawings.

### BRIEF DESCRIPTION OF THE FIGURES

FIG. 1 is a diagram illustrating an example environment for audio enhancement, in accordance with example embodiments.
FIG. 2 is a diagram illustrating an example architecture for a neural network for audio enhancement, in accordance with example embodiments.
FIG. 3 is a diagram illustrating training and inference phases of a machine learning model, in accordance with example embodiments.
FIG. 4 depicts a distributed computing architecture, in accordance with example embodiments.
FIG. 5 is a block diagram of a computing device, in accordance with example embodiments.
FIG. 6 depicts a network of computing clusters arranged as a cloud-based server system, in accordance with example embodiments.
FIG. 7 is a flowchart of a method, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. Other embodiments can be utilized, and other changes can be made, without departing from the scope of the subject matter presented herein.

Thus, the example embodiments described herein are not meant to be limiting. Aspects of the present disclosure, as generally described herein, and illustrated in the figures, can be arranged, substituted, combined, separated, and designed in a wide variety of different configurations, all of which are contemplated herein.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

### I. Overview

This application relates to enhancement of voice call audio using machine learning techniques, such as, but not limited to, neural network techniques. When a user of a computing device receives a voice call from a second user over a telecommunications network, the data packets received are generally in compressed form. Compression of the data packets may be performed to make the data packets conform to standards and protocols applicable to the telecommunications network, such as bit rate, packet size, latency, and so forth. The computing device may decompress the data packets to extract the audio waveform so that a second user's speech can be played to the user. Generally, the extracted audio waveform may include artifacts that are introduced during compression of the data packets that may diminish quality of the received audio. As such, an audio-processing-related technical problem arises that involves enhancement of the audio to remove losses and/or artifacts introduced during compression.

The herein-described techniques may utilize a neural network, such as a convolutional neural network, that can be trained and applied to perform one or more aspects as described herein. In some examples, the neural network can be arranged as an encoder/decoder neural network.

In one example, a deep neural network (DNN) has a U-net structure. The DNN takes one or more audio waveforms as input to an encoder, and outputs an enhanced version of the input waveform. In some aspects, the DNN can be trained on (i) a ground truth sample comprising unencoded audio waveforms prior to compression by an audio encoder, and (ii) a training dataset comprising decoded audio waveforms after compression of the unencoded audio waveforms by the audio encoder. Thus, a trained neural network can process an audio waveform to predict an enhanced audio waveform, in order to compensate for losses and/or artifacts introduced during compression.

In one example, (a copy of) the trained neural network can reside on a computing device. The computing device can receive compressed data packets associated with a voice call, decompress the data packets and feed a decompressed audio data frame into the trained neural network residing on the computing device. In response, the trained neural network can generate a predicted output that enhances the audio waveform. In other examples, the trained neural network is not resident on the computing device; rather, the computing device provides the audio waveform to a remotely-located trained neural network (e.g., via the Internet or another data network). The remotely-located trained neural network can process the audio waveform as indicated above and provide an output audio waveform to the computing device that can be played to a user of the computing device. In a third example, the data packet is processed through a trained neural network prior to being received by the computing device. In other examples, non-computing devices can also use the trained neural network to enhance the audio waveform.

According to the invention, the trained neural network is trained to recognize whether an audio waveform needs to be enhanced. Then, upon a determination that an audio waveform needs to be enhanced, the herein-described trained neural network could enhance the audio waveform.

As such, the herein-described techniques can improve voice calls by enhancing audio, thereby enhancing actual and/or perceived quality of voice calls. Enhancing the actual and/or perceived quality of voice calls can provide user experience benefits. These techniques are flexible, and so can apply to a wide variety of mobile devices, communication networks, and or compression-decompression schemes.

### II. Techniques for Audio Enhancement Using Neural Networks

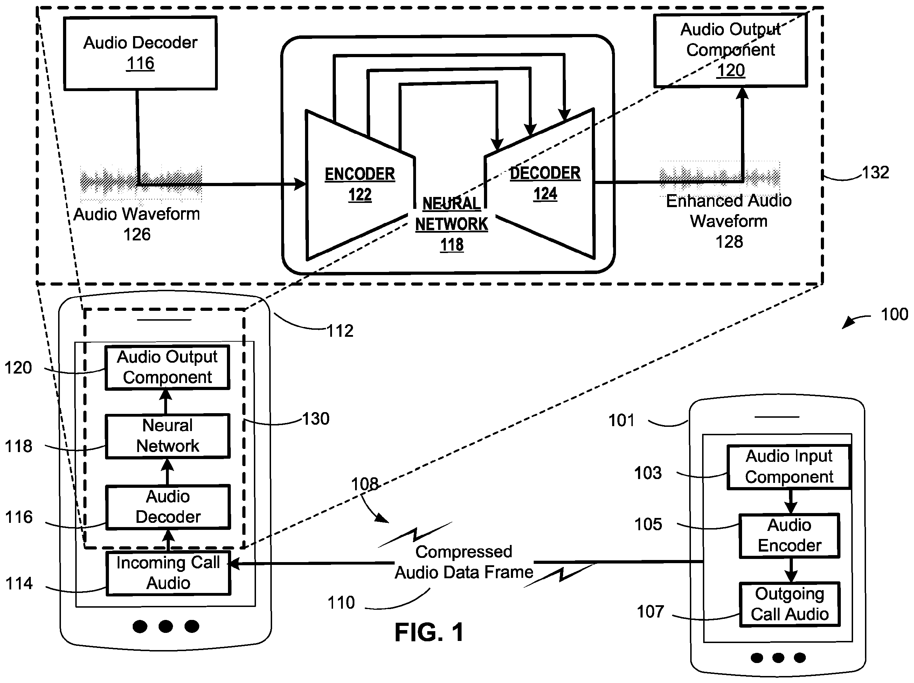

FIG. 1 is a diagram illustrating an example environment 100 for audio enhancement, in accordance with example embodiments. Environment 100 may comprise first device 101 in communication with second device 112 over a communications network 108. As an example, first device 101 and second device 112 may be communicating over a telecommunications network. For example, a first user (not shown in FIG. 1) using first device 101 can make a voice call to a second user (also not shown in FIG. 1) using second device 112. First device 101 can include an audio input component 103, audio encoder 105, and outgoing call audio 107. Audio input component 103 can be configured to record audio from an environment of first device 101. For example, when the first user makes a voice call to the second user, audio input component 103 may record the speech. In order to transmit data packets representing the speech as over communications network 108, a compression-decompression unit, such as audio encoder 105, can compress the data packets to generate compressed audio data frame 110. Outgoing call audio 107 can transmit compressed audio data frame 110 over communications network 108.

In some embodiments, audio encoder 105 may perform compression to convert the data packets into compressed audio data frame 110 that can then be transmitted over the communications network 108. Generally, a compression scheme or algorithm (referred to herein as an audio codec) used by audio encoder 105 can be based on device and/or network capabilities for a given codec, target quality of the audio, bit rate, current network capacity, reactivity to loss of data, latency conditions over communications network 108, and so forth. For example, an audio codec may depend on a communication standard or network protocol supported by communication network 108 and devices on a given network. For example, an adaptive multi-rate (AMR) speech audio coding has a bit-rate range from 4.75 to 12.2 Kbps, and an encoding frame length of 20 ms. AMR-Narrowband (AMR-NB) can be used by higher generation wireless technologies (e.g., 4G, 5G, and so forth), and has an audio bandwidth in the range of 300 Hz to 3400 Hz. AMR-Wideband (AMR-WB) has an audio bandwidth in the range of 50 Hz to 7000 Hz. As another example, codecs for Enhanced Voice Services (EVS) can be used. For example, EVS-Narrowband (EVS-NB) has a bit-rate range from 5.9 to 24.4 Kbps, and an encoded bandwidth of 20 - 4000 Hz; EVS-Wideband (EVS-WB) has a bit-rate range from 5.9 to 128 Kbps, and an encoded bandwidth of 20 - 8000 Hz; EVS-Superwideband (EVS-SWB) has a bit-rate range from 9.6 to 128 Kbps, and an encoded bandwidth of 20 - 16000 Hz; and EVS-Full Band (EVS-FB) has a bit-rate range from 16.4 to 128 Kbps, and an encoded bandwidth of 20 - 20000 Hz. For each EVS band, the encoding frame length can range from 20 ms to 100 ms in multiples of 20 ms.

In some embodiments, a Voice over Internet Protocol (VoIP) based codec may be used to convert analog voice signals into compressed audio data frames for transmission over an internet connection. VoIP based codecs impact call quality and latency during a conversation as the data frames are transmitted via the internet. VoIP based codecs include G.711, G.722 HD, and G.729 types of codecs. G.711 can compress 16-bit samples to 8 bits by using a logarithmic compression algorithm. A bitrate for a single path is 64 kbits/s, and a bitrate for both directions is 128 kbits/s. Although G.711 provides enhanced call quality, the bandwidth requirement can be high. G.722 HD is a wideband, high-definition codec, with a sample rate of 16-bits and a bitrate of 64 kbits/s. G.729 is a non-HD codec with a low bandwidth requirement. G.729 compresses analog voice signals into data frames, where each frame is ten milliseconds in length, and includes 80 audio samples. The bitrate for G.729 is 8 kbits/s.

In some embodiments, an audio codec such as an Opus codec may be used. The Opus codec can handle VoIP applications, but can also be used for other internet applications such as in-game chats, video teleconferencing, and so forth. The bit rate for the Opus codec can range from 6 kbits/s to 510 kbits/s, with a sampling rate from 8 kHz to 48 kHz, and frame sizes from 2.5 ms to 60 ms. Another VoIP based audio codec standard that can be used is an advanced audio coding (AAC) that supports lossy digital audio compression. AAC based codecs can have sampling rates from 8 kHz to 96 kHz, and can support arbitrary bit rates and variable frame lengths. The audio codecs described herein are for illustrative purposes only. In general, techniques disclosed herein are applicable to compression schemes or algorithms that are used to process audio waveforms.

Also, for example, communications network 108 may comprise multiple networks with multiple communication protocols. Accordingly, compressed audio data frame 110 can be compressed to be compatible with transmission over such multiple networks and may be re-compressed at network interfaces.

Accordingly, based at least in part on a rate of transmission and a frame size, some instances may involve a lossy compression, thereby introducing a compensation loss factor. The term "compensation loss factor" as used herein, generally refers to a loss due to compression and/or decompression of a data packet. In some embodiments, the compensation loss factor may be determined for a codec (or a combination of multiple codecs) as an average over measured historical losses due to data compression, data decompression, or both. In some embodiments, compensation loss factor of audio encoder 105 may include an audio frequency range, frequency resolution and/or quantization effects. For example, one or more frequency ranges (e.g., high frequency ranges) may be dropped during compression to accommodate low-bitrate scenarios. Also, for example, compression may cause one or more characteristics of the speech to be modified (e.g., certain letters of the alphabet, syllables, phonetic sounds, etc. may be suppressed and/or eliminated), and compensation loss factor may identify the one or more characteristics. Also, for example, a frequency bandwidth may be reduced, and compensation loss factor may identify the reduction in bandwidth. As another example, frequency quantization may result in mis-representing the input frequency bands and result in an output that can be characterized as a noise signal, and compensation loss factor may identify the signal noise.

Compressed audio data frame 110 can be received by second device 112 as incoming call audio 114. Audio decoder 116 can decompress compressed audio data frame 110 to extract audio waveform 126. In some embodiments, extracted audio waveform 126 may include metadata indicative of transmission protocol(s) of communications network 108. In some embodiments, extracted audio waveform 126 may include metadata indicative of characteristics of compression and/or decompression performed by audio encoder 105 or audio decoder 116, respectively. Also, for example, extracted audio waveform 126 may include metadata indicative of attributes of first device 101 and/or second device 112.

Audio decoder 116 may provide audio waveform 126 to neural network 118. Neural network 118 may be, for example, a convolutional neural network that can take as, input audio waveform 126 and predict as output, an enhanced audio waveform 128, where enhanced audio waveform 128 is an enhanced version of audio waveform 126. For purposes of illustration only, an enlarged view 132 of region 130 is shown. Region 130 includes audio decoder 116, neural network 118, and audio output component 120.

Generally, neural network 118 can perform enhancements in addition to existing frequency based enhancement. Neural network 118 can include an encoder 122 and a decoder 124. Neural network 118 can be trained to compensate for a compression loss factor of an audio encoder that compressed the audio data frame. For example, neural network 118 can be trained to compensate for a compression loss factor of audio encoder 105 (and/or audio decoder 116) that generated (and/or decompressed) compressed audio data frame 110. For example, where the compensation loss factor includes one or more characteristics of speech that are modified during compression, neural network 118 can be trained to compensate for such one or more characteristics of speech. Also, for example, where the compensation loss factor includes signal noise that may be introduced during compression, neural network 118 can be trained to compensate for such signal noise to generate clean audio where an amount of the signal noise has been reduced and/or eliminated.

In some embodiments, where the compensation loss factor is one or more frequency ranges that are dropped during compression, neural network 118 can be trained to compensate for such one or more frequency ranges. In some embodiments, the compression loss factor of audio encoder 105 may include a reduction in a frequency bandwidth, and neural network 118 can be trained to compensate for such reduction in the frequency bandwidth. Also, for example, the compression loss factor of audio encoder 105 may include a change to a quantization of a frequency spectrum, and neural network 118 can be trained to correct the quantization of the frequency spectrum. As another example, the compression loss factor of audio encoder 105 may include an adjustment to one or more frequency bands, and neural network 118 can be trained to re-adjust the one or more frequency bands. In some embodiments, the audio waveform may include content in a given frequency range, and neural network 118 can be trained to enhance specific content in the given frequency range. For example, audio content in lower frequencies (e.g., sub-bass or bass) may be enhanced. As another example, vowel sounds in the English alphabet generally correspond to lower frequency bands (e.g., 250Hz and 500Hz bands), and consonant sounds in the English alphabet generally correspond to higher frequency bands (e.g., 2kHz and 4kHz bands), and audio content in one or more of these bands can be enhanced. For example, when the audio waveform includes one or more frequency bandwidths, the enhanced version of the audio waveform may include enhanced audio content in at least one frequency bandwidth of the one or more frequency bandwidths Such enhancements may also be applied for non-speech (e g. music content) as well. Accordingly, audio content in these bands can be enhanced.

A typical frequency range for a human voice conversation is 300Hz - 10000Hz. Accordingly, in some communication protocols, frequency content below 300Hz (e g., frequency content in the range 100Hz - 300Hz), and/or above 3400Hz may be deemed to be not important, and such content may not be included in compressed audio data frame 110. Accordingly, the compression loss factor of audio encoder 105 may include a loss of such frequency content, and neural network 118 can be trained to compensate for such loss in the frequency content. In some embodiments, the audio waveform may include audio at a first frequency bandwidth, and the enhanced version of the audio waveform may include a second frequency bandwidth different from the first frequency bandwidth. For example, the enhanced version of the audio waveform may include a second frequency bandwidth greater than the first frequency bandwidth.

In some embodiments, neural network 118 may provide enhanced audio waveform 128 to audio output component 120. The term "provide" as used herein, generally includes playing, recording, and/or re-transmitting of the enhanced audio waveform 128. In some embodiments, audio output component 120 can be configured to output audio to an environment of second device 112. For example, audio output component 120 can be configured to play enhanced audio waveform 128 (e.g., to the second user using second device 112 to receive a voice call from the first user using first device 101). In some embodiments, audio output component 120 may be a part of second device 112. For example, audio output component 120 may include a plurality of speakers located on second device 112. In some embodiments, audio output component 120 may be part of a second device communicatively coupled to second device 112. For example, audio output component 120 may be a network device (e.g., a router, a modem) configured to output audio, one or more speakers, an audio amplifier system, a headphone, a car audio, and so forth.

In some embodiments, neural network 118 may be a pre-processing network, and may provide enhanced audio waveform 128 to another neural network that further processes enhanced audio waveform 128. For example, neural network 118 may provide enhanced audio waveform 128 to another neural network that enhances audio characteristics of enhanced audio waveform 128, other than those associated with compression and/or decompression. In such instances, a final processed waveform may be provided to audio output component 120 by such other neural networks. In some embodiments, one or more such additional neural networks may be a component of neural network 118. In some embodiments, enhanced audio waveform 128 can be recorded for storing in second computing device 112 (e.g., as a voicemail). In some embodiments, enhanced audio waveform 128 can be re-transmitted to another device.

In some embodiments, a pre-processing step may be performed prior to processing audio waveform 128 through neural network 118. For example, the pre-processing step may be performed to account for factors such as signal conditioning, and/or an alternative implementation through a frequency domain neural network (or apply another transform).

In some examples, a user interface screen (not shown) displayed by a display component of second device 112 may present a user (e.g., the second user using second device 112) with an ability to enable or disable audio processing of an audio waveform. For example, the user interface may present the user with various settings to adjust audio playback preferences. For example, an audio processing architecture of second device 112 can allow an application to individually set parameters for each channel (e.g., audio channel for left ear and audio channel for right ear), or each frequency band, to enhance or compensate the audio experience of the user. In some implementations, user indicated preferences may be stored in a user profile. In some embodiments, audio output component 120 may adjust an output waveform (e.g., enhanced audio waveform 128) based on a user profile. In some embodiments, second device 112 may receive a user indication of the user profile via the display component.

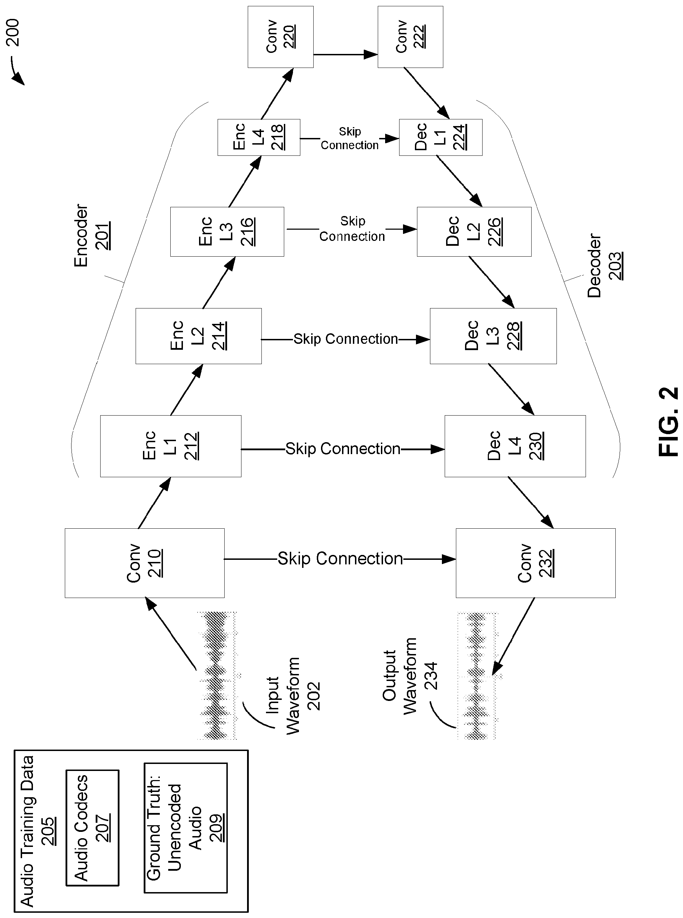

FIG. 2 is a diagram illustrating an example architecture 200 for a neural network for audio enhancement, in accordance with example embodiments. In some embodiments, neural network 118 of FIG. 1 may be a symmetric encoder-decoder network with skip connections. For example, neural network 118 can be modeled around a UNet with skip connections. Example architecture 200 for neural network 118 can include an encoder 201 and a decoder 203. Input waveform 202 is input into encoder 201, and output waveform 234, which is an enhanced version of input waveform 202 is output by decoder 203. A skip-connection may be added between each encoder block and its mirrored decoder block. In some embodiments, the input waveform 202 can go through four encoder blocks, Enc L1 212, Enc L2 214, Enc L3 216, and Enc L4 218, and four decoder blocks, Dec L1 224, Dec L2 226, Dec L3 228, and Dec L4 230. These blocks may be bounded by two plain convolution layers. For example, encoder 201 may be bounded by a first plain convolution block 210 and a second plain convolution block 220. Likewise, decoder 203 may be bounded by a third plain convolution block 222 and a fourth plain convolution block 232. One or more of convolution blocks 210, 220, 222, and 232 may be configured to perform frequency domain processing.

The encoder may follow a downsampling scheme of (2, 2, 8, 8) while the decoder may up-sample in the reverse order of (8, 8, 2, 2). In some embodiments, a number of channels can be doubled whenever down-sampling and halved whenever up-sampling. Each decoder block (e.g., Dec L1 224, Dec L2 226, Dec L3 228, and Dec L4 230) may include an up-sampling layer, in the form of a transposed 1D convolution, followed by three residual units each including 1D convolutions with dilation rates of 1, 3, and 9, respectively. Each encoder block (e.g., Enc L1 212, Enc L2 214, Enc L3 216, and Enc L4 218) can mirror the decoder block, and include the same residual units followed by a strided 1D convolution for down-sampling. In some embodiments, a weight normalization and an exponential linear unit (ELU) function may be utilized by neural network 118.

Audio training data 205 represents decompressed audio data frames, where the compression was performed based on multiple audio codecs 207. For example, audio training data 205 can include decompressed audio data frames, where the compression was performed based on one or more of adaptive multi-rate narrowband (AMR-NB), adaptive multi-rate wideband (AMR-WB), Voice over Internet Protocol (VoIP), or Enhanced Voice Services (EVS) codecs. Also, for example, audio training data 205 can include decompressed audio data frames, where the compression was performed based on Opus audio codecs. For example, audio data frames may be compressed using one or more audio codecs (e.g., audio codecs 207), transmitted over one or more communication networks (e.g., communication network 108), and then decompressed to generate audio training data 205.

Ground truth data 209 may be based on ground truth data collection of unencoded audio. For example, ground truth data 209 can include audio data frames prior to compression by one or more audio codecs (e.g., audio codecs 207). In some embodiments, neural network 118 can be trained to receive a particular audio waveform representing a decompressed audio data frame, learn a compression loss factor of an audio encoder that compressed the audio data frame, and output an enhanced version of the particular audio waveform by compensating for the compression loss factor. For example, during training, an output of neural network 118 can be compared to ground truth data 209 to compensate for losses during compression, and/or transmission over a communication network after compression. It may be noted here that legacy networks (or circuit-switched networks) may be based on different protocols. Modern networks (e.g., 4G, 5G networks) are based on IP-based voice calls (e.g., VoLTE) that are transmitted over an IP Multimedia Subsystem (IMS). However, regardless of the underlying network protocol, neural network 118 can be trained based on appropriate training data for the different network protocols or audio codecs.

### III. Training Machine Learning Models for Generating Inferences/Predictions

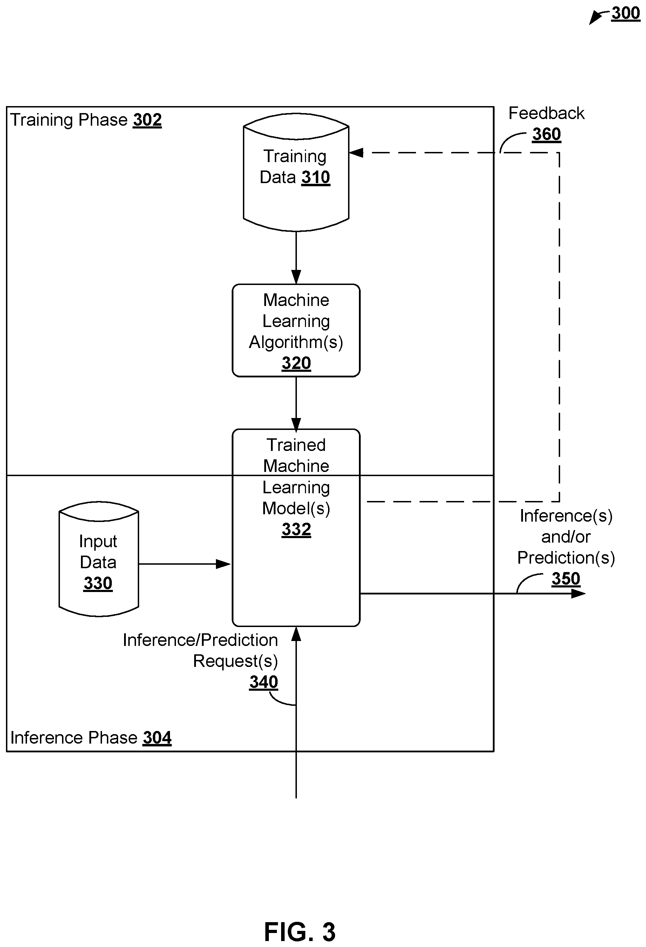

FIG. 3 shows diagram 300 illustrating a training phase 302 and an inference phase 304 of trained machine learning model(s) 332, in accordance with example embodiments. Some machine learning techniques involve training one or more machine learning algorithms, on an input set of training data to recognize patterns in the training data and provide output inferences and/or predictions about (patterns in the) training data. The resulting trained machine learning algorithm can be termed as a trained machine learning model. For example, FIG. 3 shows training phase 302 where one or more machine learning algorithm(s) 320 are being trained on training data 310 to become trained machine learning model(s) 332. Then, during inference phase 304, trained machine learning model(s) 332 can receive input data 330 and one or more inference/prediction requests 340 (perhaps as part of input data 330) and responsively provide as an output one or more inferences and/or prediction(s) 350.

As such, trained machine learning model(s) 332 can include one or more models of one or more machine learning algorithm(s) 320. Machine learning algorithm(s) 320 may include, but are not limited to: an artificial neural network (e.g., a herein-described convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 320 may be supervised or unsupervised, and may implement any suitable combination of online and offline learning.

In some examples, machine learning algorithm(s) 320 and/or trained machine learning model(s) 332 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 320 and/or trained machine learning model(s) 332. In some examples, trained machine learning model(s) 332 can be trained, reside and execute to provide inferences on a particular computing device, and/or otherwise can make inferences for the particular computing device.

During training phase 302, machine learning algorithm(s) 320 can be trained by providing at least training data 310 as training input using unsupervised, supervised, semi-supervised, and/or reinforcement learning techniques. Unsupervised learning involves providing a portion (or all) of training data 310 to machine learning algorithm(s) 320 and machine learning algorithm(s) 320 determining one or more output inferences based on the provided portion (or all) of training data 310. Supervised learning involves providing a portion of training data 310 to machine learning algorithm(s) 320, with machine learning algorithm(s) 320 determining one or more output inferences based on the provided portion of training data 310, and the output inference(s) are either accepted or corrected based on correct results associated with training data 310. In some examples, supervised learning of machine learning algorithm(s) 320 can be governed by a set of rules and/or a set of labels for the training input, and the set of rules and/or set of labels may be used to correct inferences of machine learning algorithm(s) 320.

Semi-supervised learning involves having correct results for part, but not all, of training data 310. During semi-supervised learning, supervised learning is used for a portion of training data 310 having correct results, and unsupervised learning is used for a portion of training data 310 not having correct results. Reinforcement learning involves machine learning algorithm(s) 320 receiving a reward signal regarding a prior inference, where the reward signal can be a numerical value. During reinforcement learning, machine learning algorithm(s) 320 can output an inference and receive a reward signal in response, where machine learning algorithm(s) 320 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 320 and/or trained machine learning model(s) 332 can be trained using other machine learning techniques, including but not limited to, incremental learning and curriculum learning.

In some examples, machine learning algorithm(s) 320 and/or trained machine learning model(s) 332 can use transfer learning techniques. For example, transfer learning techniques can involve trained machine learning model(s) 332 being pre-trained on one set of data and additionally trained using training data 310. More particularly, machine learning algorithm(s) 320 can be pre-trained on data from one or more computing devices and a resulting trained machine learning model provided to a particular computing device that is intended to execute the trained machine learning model during inference phase 304. Then, during training phase 302, the pre-trained machine learning model can be additionally trained using training data 310, where training data 310 can be derived from kernel and non-kernel data of the particular computing device. This further training of the machine learning algorithm(s) 320 and/or the pre-trained machine learning model using training data 310 of the particular computing device's data can be performed using either supervised or unsupervised learning. In some embodiments, machine learning algorithm(s) 320 and/or the pre-trained machine learning model can be trained to receive a particular audio waveform representing a decompressed audio data frame, learn a compression loss factor of an audio encoder that compressed the audio data frame, and output an enhanced version of the particular audio waveform by compensating for the compression loss factor. Once machine learning algorithm(s) 320 and/or the pre-trained machine learning model has been trained on at least training data 310, training phase 302 can be completed. The trained resulting machine learning model can be utilized as at least one of trained machine learning model(s) 332.

In particular, once training phase 302 has been completed, trained machine learning model(s) 332 can be provided to a computing device, if not already on the computing device. Inference phase 304 can begin after trained machine learning model(s) 332 are provided to the particular computing device.

During inference phase 304, trained machine learning model(s) 332 can receive input data 330 and generate and output one or more corresponding inferences and/or prediction(s) 350 about input data 330. As such, input data 330 can be used as an input to trained machine learning model(s) 332 for providing corresponding inference(s) and/or prediction(s) 350 to kernel components and non-kernel components. For example, trained machine learning model(s) 332 can generate inference(s) and/or prediction(s) 350 in response to one or more inference/prediction requests 340. In some examples, trained machine learning model(s) 332 can be executed by a portion of other software. For example, trained machine learning model(s) 332 can be executed by an inference or prediction daemon to be readily available to provide inferences and/or predictions upon request. Input data 330 can include data from the particular computing device executing trained machine learning model(s) 332 and/or input data from one or more computing devices other than the particular computing device.

Input data 330 can include decompressed audio data frames, where the compression was performed based on one or more of adaptive multi-rate narrowband (AMR-NB), adaptive multi-rate wideband (AMR-WB), Voice over Internet Protocol (VoIP), or Enhanced Voice Services (EVS) codecs. The ground truth data can be based on ground truth data collection of unencoded audio.

Inference(s) and/or prediction(s) 350 can include enhanced versions of audio waveforms, and/or other output data produced by trained machine learning model(s) 332 operating on input data 330 (and training data 310). In some examples, trained machine learning model(s) 332 can use output inference(s) and/or prediction(s) 350 as input feedback 360. Trained machine learning model(s) 332 can also rely on past inferences as inputs for generating new inferences.

Neural network 118 can be an example of machine learning algorithm(s) 320. After training, the trained version of neural network 118 can be an example of trained machine learning model(s) 332. In this approach, an example of inference / prediction request(s) 340 can be a request to enhance an audio waveform and a corresponding example of inferences and/or prediction(s) 350 can be an output enhanced version of audio waveform.

In some examples, a given computing device can include the trained version of neural network 118, perhaps after training neural network 118. Then, the given computing device can receive requests to enhance an audio waveform, and use the trained version of neural network 118 to generate the enhanced version of audio waveform.

In some examples, two or more computing devices can be used to provide output audio; *e.g.*, a first computing device can generate and send requests to enhance an audio waveform to a second computing device. Then, the second computing device can use the trained version of neural network 118, perhaps after training neural network 118, to generate the enhanced version of audio waveform, and respond to the request from the first computing device for the enhanced version of audio waveform. Then, upon reception of responses to the requests, the first computing device can provide the requested enhanced version of audio waveform (e.g., using a speaker or another connected audio output device).

### IV. Example Data Network

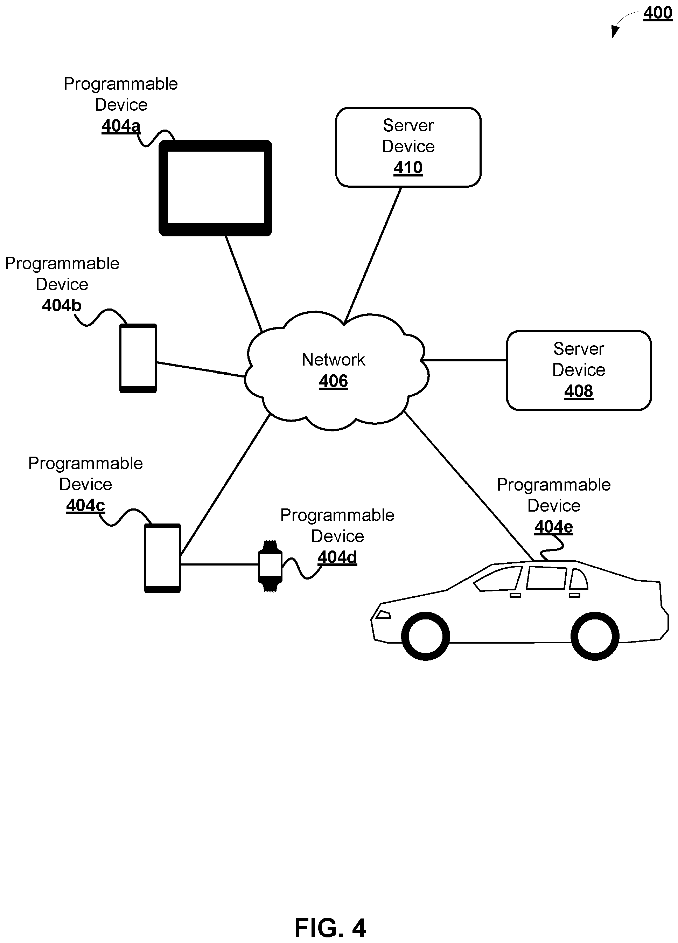

FIG. 4 depicts a distributed computing architecture 400, in accordance with example embodiments. Distributed computing architecture 400 includes server devices 408, 410 that are configured to communicate, via network 406, with programmable devices 404a, 404b, 404c, 404d, 404e. Network 406 may correspond to a local area network (LAN), a wide area network (WAN), a WLAN, a WWAN, a corporate intranet, the public Internet, or any other type of network configured to provide a communications path between networked computing devices. Network 406 may also correspond to a combination of one or more LANs, WANs, corporate intranets, and/or the public Internet.

Although FIG. 4 only shows five programmable devices, distributed application architectures may serve tens, hundreds, or thousands of programmable devices. Moreover, programmable devices 404a, 404b, 404c, 404d, 404e (or any additional programmable devices) may be any sort of computing device, such as a mobile computing device, desktop computer, wearable computing device, head-mountable device (HMD), network terminal, and/or any device configured to receive cellular calls. In some examples, such as illustrated by programmable devices 404a, 404b, 404c, 404e, programmable devices can be directly connected to network 406. In other examples, such as illustrated by programmable device 404d, programmable devices can be indirectly connected to network 406 via an associated computing device, such as programmable device 404c. In this example, programmable device 404c can act as an associated computing device to pass electronic communications between programmable device 404d and network 406. In other examples, such as illustrated by programmable device 404e, a computing device can be part of and/or inside a vehicle, such as a car, a truck, a bus, a boat or ship, an airplane, etc. In other examples not shown in FIG. 4, a programmable device can be both directly and indirectly connected to network 406.

Server devices 408, 410 can be configured to perform one or more services, as requested by programmable devices 404a-404e. For example, server device 408 and/or 410 can provide content to programmable devices 404a-404e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 408 and/or 410 can provide programmable devices 404a-404e with access to software for database, search, computation, graphical, audio, video, World Wide Web/Internet utilization, and/or other functions. Many other examples of server devices are possible as well.

### V. Computing Device Architecture

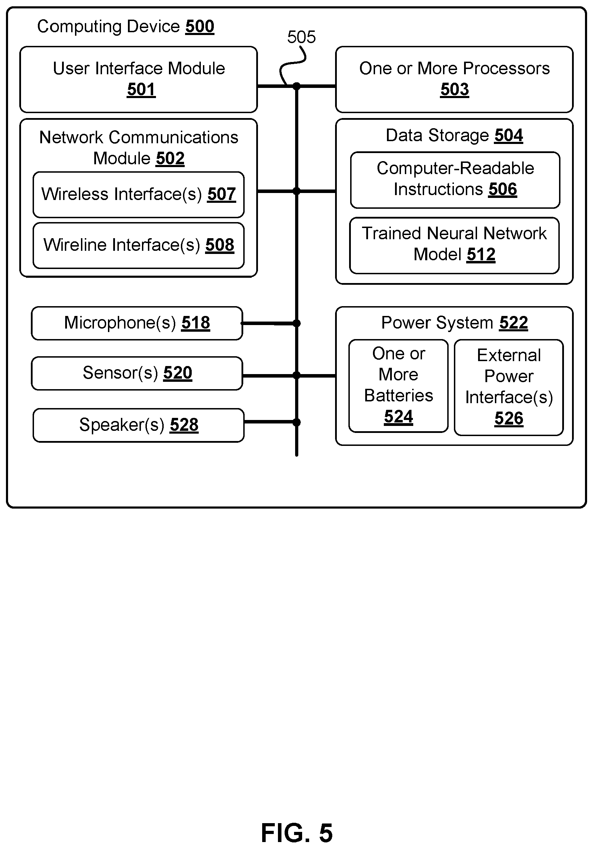

FIG. 5 is a block diagram of an example computing device 500, in accordance with example embodiments. In particular, computing device 500 shown in FIG. 5 can be configured to perform at least one function of and/or related to a neural network as disclosed herein, and/or method 1000.

Computing device 500 may include a user interface module 501, a network communications module 502, one or more processors 503, data storage 504, microphone(s) 518, one or more sensor(s) 520, power system 522, and one or more speaker(s) 528, all of which may be linked together via a system bus, network, or other connection mechanism 505.

User interface module 501 can be operable to send data to and/or receive data from external user input/output devices. For example, user interface module 501 can be configured to send and/or receive data to and/or from user input devices such as a touch screen, a computer mouse, a keyboard, a keypad, a touch pad, a trackball, a joystick, a voice recognition module, and/or other similar devices. User interface module 501 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 501 can also be configured to generate audible outputs, with audio output devices such as a speaker, speaker jack, audio output port, audio output device, earphones, and/or other similar devices. User interface module 501 can further be configured with one or more haptic devices that can generate haptic outputs, such as vibrations and/or other outputs detectable by touch and/or physical contact with computing device 500. In some examples, user interface module 501 can be used to provide a graphical user interface (GUI) for utilizing computing device 500. In some examples, the GUI can be used to provide a user with an ability to enable or disable audio processing of an audio waveform. For example, the GUI may present the user with various settings to adjust audio playback preferences. For example, an audio processing architecture of computing device 500 can allow an application to individually set parameters for each channel (e.g., audio channel for left ear and audio channel for right ear), or each frequency band, to enhance or compensate the audio experience of the user. In some embodiments, computing device 500 may receive a user indication of the user profile via the GUI.

Network communications module 502 can include one or more devices that provide one or more wireless interface(s) 507 and/or one or more wireline interface(s) 508 that are configurable to communicate via a network. Wireless interface(s) 507 can include one or more wireless transmitters, receivers, and/or transceivers, such as a Bluetooth^{™} transceiver, a Zigbee^{®} transceiver, a Wi-Fi^{™} transceiver, a WiMAX^{™} transceiver, an LTE^{™} transceiver, and/or other type of wireless transceiver configurable to communicate via a wireless network. Wireline interface(s) 508 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network. In some embodiments, network communications module 502 can interface with a communications network (e.g., communications network 108).

In some examples, network communications module 502 can be configured to provide reliable, secured, and/or authenticated communications. For each communication described herein, information for facilitating reliable communications (e.g., guaranteed message delivery) can be provided, perhaps as part of a message header and/or footer (e.g., packet/message sequencing information, encapsulation headers and/or footers, size/time information, and transmission verification information such as cyclic redundancy check (CRC) and/or parity check values). Communications can be made secure (e.g., be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 503 can include one or more general purpose processors, and/or one or more special purpose processors (e.g., digital signal processors, tensor processing units (TPUs), graphics processing units (GPUs), application specific integrated circuits, etc.). One or more processors 503 can be configured to execute computer-readable instructions 506 that are contained in data storage 504 and/or other instructions as described herein.

Data storage 504 can include one or more non-transitory computer-readable storage media that can be read and/or accessed by at least one of one or more processors 503. The one or more computer-readable storage media can include volatile and/or non-volatile storage components, such as optical, magnetic, organic or other memory or disc storage, which can be integrated in whole or in part with at least one of one or more processors 503. In some examples, data storage 504 can be implemented using a single physical device (e.g., one optical, magnetic, organic or other memory or disc storage unit), while in other examples, data storage 504 can be implemented using two or more physical devices.

Data storage 504 can include computer-readable instructions 506 and perhaps additional data. In some examples, data storage 504 can include storage required to perform at least part of the herein-described methods, scenarios, and techniques and/or at least part of the functionality of the herein-described devices and networks. In some examples, data storage 504 can include storage for a trained neural network model 512 (*e.g.*, a model of trained convolutional neural networks). In particular of these examples, computer-readable instructions 506 can include instructions that, when executed by one or more processor(s) 503, enable computing device 500 to provide for some or all of the functionality of trained neural network model 512.

In some examples, computing device 500 can include microphone(s) 518. Microphone(s) 518 can include one or more audio capture devices, equipped to capture audio and record the captured audio from an environment of computing device 500. For example, when a user uses a mobile phone application on computing device 500 to make a voice call, microphone(s) 518 can capture the speech of the user.

In some examples, computing device 500 can include one or more sensor(s) 520. Sensor(s) 520 can be configured to measure conditions within computing device 500 and/or conditions in an environment of computing device 500 and provide data about these conditions. For example, sensor(s) 520 can include one or more of: (i) sensors for obtaining data about computing device 500, such as, but not limited to, a thermometer for measuring a temperature of computing device 500, a battery sensor for measuring power of one or more batteries of power system 522, and/or other sensors measuring conditions of computing device 500; (ii) an identification sensor to identify other objects and/or devices, such as, but not limited to, a Radio Frequency Identification (RFID) reader, proximity sensor, one-dimensional barcode reader, two-dimensional barcode (e.g., Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 500, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 500, such as, but not limited to, an infrared sensor, an optical sensor, a light sensor, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (e.g., inertial forces and/or G-forces) acting about computing device 500, such as, but not limited to one or more sensors that measure: forces in one or more dimensions, torque, ground force, friction, and/or a zero moment point (ZMP) sensor that identifies ZMPs and/or locations of the ZMPs. Many other examples of sensor(s) 520 are possible as well.

Power system 522 can include one or more batteries 524 and/or one or more external power interfaces 526 for providing electrical power to computing device 500. Each battery of the one or more batteries 524 can, when electrically coupled to the computing device 500, act as a source of stored electrical power for computing device 500. One or more batteries 524 of power system 522 can be configured to be portable. Some or all of one or more batteries 524 can be readily removable from computing device 500. In other examples, some or all of one or more batteries 524 can be internal to computing device 500, and so may not be readily removable from computing device 500. Some or all of one or more batteries 524 can be rechargeable. For example, a rechargeable battery can be recharged via a wired connection between the battery and another power supply, such as by one or more power supplies that are external to computing device 500 and connected to computing device 500 via the one or more external power interfaces. In other examples, some or all of one or more batteries 524 can be non-rechargeable batteries.

One or more external power interfaces 526 of power system 522 can include one or more wired-power interfaces, such as a USB cable and/or a power cord, that enable wired electrical power connections to one or more power supplies that are external to computing device 500. One or more external power interfaces 526 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 526, computing device 500 can draw electrical power from the external power source the established electrical power connection. In some examples, power system 522 can include related sensors, such as battery sensors associated with the one or more batteries or other types of electrical power sensors.

In some examples, computing device 500 can include one or more speaker(s) 528. Speaker(s) 528 can be configured to output audio to an environment of computing device 500. For example, trained neural network model 512 can generate an enhanced version of an audio waveform, and speaker(s) 528 can be configured to output the enhanced version of the audio waveform to an environment of computing device 500.

### VI. Cloud-Based Servers

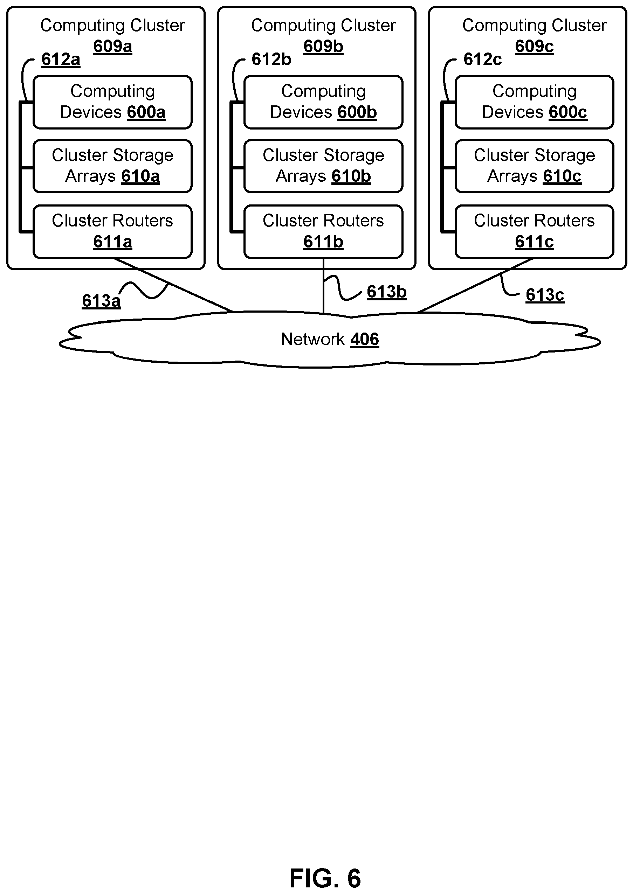

FIG. 6 depicts a cloud-based server system in accordance with an example embodiment. In FIG. 6, functionality of neural networks, and/or a computing device can be distributed among computing clusters 609a, 609b, 609c. Computing cluster 609a can include one or more computing devices 600a, cluster storage arrays 610a, and cluster routers 611a connected by a local cluster network 612a. Similarly, computing cluster 609b can include one or more computing devices 600b, cluster storage arrays 610b, and cluster routers 611b connected by a local cluster network 612b. Likewise, computing cluster 609c can include one or more computing devices 600c, cluster storage arrays 610c, and cluster routers 611c connected by a local cluster network 612c.

In some embodiments, each of computing clusters 609a, 609b, and 609c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 609a, for example, computing devices 600a can be configured to perform various computing tasks of neural network, confidence learning, and/or a computing device. In one embodiment, the various functionalities of a neural network, confidence learning, and/or a computing device can be distributed among one or more of computing devices 600a, 600b, 600c. Computing devices 600b and 600c in respective computing clusters 609b and 609c can be configured similarly to computing devices 600a in computing cluster 609a. On the other hand, in some embodiments, computing devices 600a, 600b, and 600c can be configured to perform different functions.

In some embodiments, computing tasks and stored data associated with a neural networks, and/or a computing device can be distributed across computing devices 600a, 600b, and 600c based at least in part on the processing requirements of a neural networks, and/or a computing device, the processing capabilities of computing devices 600a, 600b, 600c, the latency of the network links between the computing devices in each computing cluster and between the computing clusters themselves, and/or other factors that can contribute to the cost, speed, fault-tolerance, resiliency, efficiency, and/or other design goals of the overall system architecture.

Cluster storage arrays 610a, 610b, 610c of computing clusters 609a, 609b, 609c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of neural networks, and/or a computing device can be distributed across computing devices 600a, 600b, 600c of computing clusters 609a, 609b, 609c, various active portions and/or backup portions of these components can be distributed across cluster storage arrays 610a, 610b, 610c. For example, some cluster storage arrays can be configured to store one portion of the data of a neural network, and/or a computing device, while other cluster storage arrays can store other portion(s) of data of a neural network, and/or a computing device. Also, for example, some cluster storage arrays can be configured to store the data of a first neural network, while other cluster storage arrays can store the data of a second and/or third neural network. Additionally, some cluster storage arrays can be configured to store backup versions of data stored in other cluster storage arrays.

Cluster routers 611a, 611b, 611c in computing clusters 609a, 609b, 609c can include networking equipment configured to provide internal and external communications for the computing clusters. For example, cluster routers 611a in computing cluster 609a can include one or more internet switching and routing devices configured to provide (i) local area network communications between computing devices 600a and cluster storage arrays 610a via local cluster network 612a, and (ii) wide area network communications between computing cluster 609a and computing clusters 609b and 609c via wide area network link 613a to network 406. Cluster routers 611b and 611c can include network equipment similar to cluster routers 611a, and cluster routers 611b and 611c can perform similar networking functions for computing clusters 609b and 609c that cluster routers 611a perform for computing cluster 609a.

In some embodiments, the configuration of cluster routers 611a, 611b, 611c can be based at least in part on the data communication requirements of the computing devices and cluster storage arrays, the data communications capabilities of the network equipment in cluster routers 611a, 611b, 611c, the latency and throughput of local cluster networks 612a, 612b, 612c, the latency, throughput, and cost of wide area network links 613a, 613b, 613c, and/or other factors that can contribute to the cost, speed, fault-tolerance, resiliency, efficiency and/or other design criteria of the moderation system architecture.

### VII. Example Methods of Operation

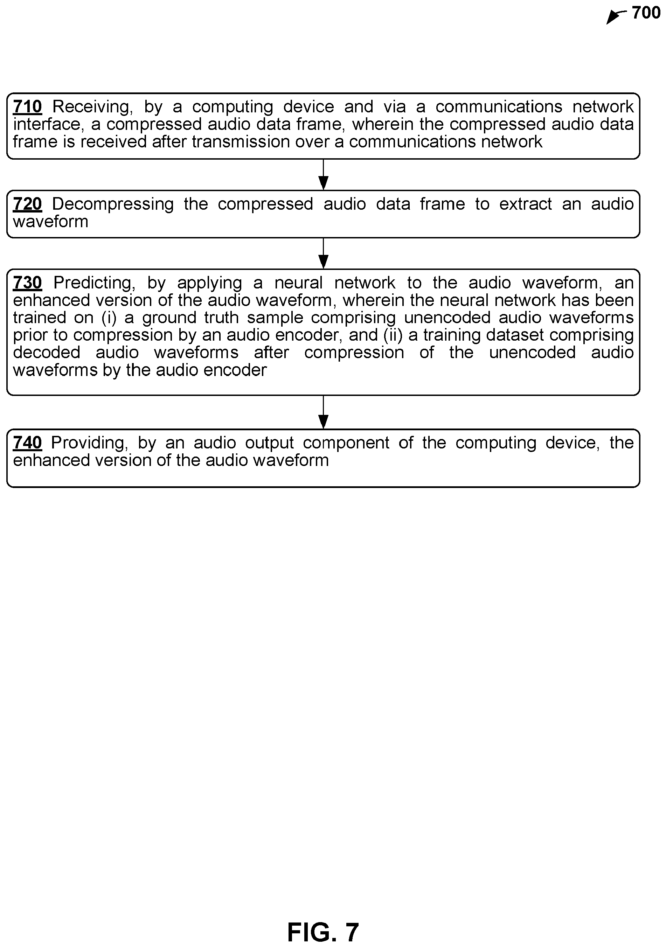

FIG. 7 illustrates a method 700, in accordance with example embodiments. Method 700 may include various blocks or steps. The blocks or steps may be carried out individually or in combination. The blocks or steps may be carried out in any order and/or in series or in parallel. Further, blocks or steps may be omitted or added to method 700.

The blocks of method 700 may be carried out by various elements of computing device 500 as illustrated and described in reference to Figure 5.

Block 710 includes receiving, by a computing device and via a communications network interface, a compressed audio data frame, wherein the compressed audio data frame is received after transmission over a communications network.

Block 720 includes decompressing the compressed audio data frame to extract an audio waveform.

Block 730 includes predicting, by applying a neural network to the audio waveform, an enhanced version of the audio waveform, wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder.

Block 740 includes providing, by an audio output component of the computing device, the enhanced version of the audio waveform.

Some embodiments include initially training the neural network based on the ground truth sample and the training dataset. The initial training of the neural network may be performed, for example, on one or more of adaptive multi-rate narrowband (AMR-NB), adaptive multi-rate wideband (AMR-WB), Voice over Internet Protocol (VoIP), or Enhanced Voice Services (EVS) codecs, and so forth.

In some embodiments, the neural network may utilize an exponential linear unit (ELU) function.

In some embodiments, the enhanced version of the audio waveform may include a waveform with an audio frequency range that was dropped during the compression by the audio encoder.

In some embodiments, the enhanced version of the audio waveform may include a waveform with a reduced number of one or more speech artifacts that were introduced during the compression by the audio encoder.

In some embodiments, the enhanced version of the audio waveform may include a waveform with a reduced amount of signal noise, and wherein the signal noise was introduced during the compression by the audio encoder.

In some embodiments, the audio waveform may include audio at a first frequency bandwidth, and the enhanced version of the audio waveform may include a second frequency bandwidth greater than the first frequency bandwidth.

In some embodiments, the audio waveform may include one or more frequency bandwidths, and the enhanced version of the audio waveform may include enhanced audio content in at least one frequency bandwidth of the one or more frequency bandwidths.

Some embodiments include adjusting the enhanced version of the audio waveform based on a user profile. Such embodiments may further include receiving, via a display component of the computing device, a user indication of the user profile.

In some embodiments, the prediction of the enhanced version of the audio waveform may include obtaining a trained neural network at the computing device. Such embodiments may further include applying the trained neural network as obtained to the predicting of the enhanced version of the audio waveform.

In some embodiments, the initial training of the neural network may include training the neural network at the computing device.

In some embodiments, the neural network may be a pre-processing network for a second neural network.

In some embodiments, the training dataset may include decoded audio waveforms that are decoded after transmission over one or more communications networks.

The particular arrangements shown in the Figures should not be viewed as limiting. It should be understood that other embodiments may include more or less of each element shown in a given Figure. Further, some of the illustrated elements may be combined or omitted. Yet further, an illustrative embodiment may include elements that are not illustrated in the Figures.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical functions or actions in the method or technique. The program code and/or related data can be stored on any type of computer readable medium such as a storage device including a disk, hard drive, or other storage medium.

The computer readable medium can also include non-transitory computer readable media such as computer-readable media that store data for short periods of time like register memory, processor cache, and random access memory (RAM). The computer readable media can also include non-transitory computer readable media that store program code and/or data for longer periods of time. Thus, the computer readable media may include secondary or persistent long term storage, like read only memory (ROM), optical or magnetic disks, compact-disc read only memory (CD-ROM), for example. The computer readable media can also be any other volatile or non-volatile storage systems. A computer readable medium can be considered a computer readable storage medium, for example, or a tangible storage device.

While various examples and embodiments have been disclosed, other examples and embodiments will be apparent to those skilled in the art. The various disclosed examples and embodiments are for purposes of illustration and are not intended to be limiting, with the true scope being indicated by the following claims.

## Claims

1. A computer-implemented method, comprising:
receiving, by a computing device and via a communications network interface, a compressed version of an audio data frame (110), wherein the compressed version is received after transmission over a communications network;
decompressing the compressed version to extract an audio waveform (126);
recognizing, using a neural network (118), whether the audio waveform needs to be enhanced;
upon determining that the audio waveform needs to be enhanced:
predicting, by applying the neural network to the audio waveform, an enhanced version of the audio waveform (128), wherein the neural network has been trained on (i) a ground truth sample comprising unencoded audio waveforms prior to compression by an audio encoder, and (ii) a training dataset comprising decoded audio waveforms after compression of the unencoded audio waveforms by the audio encoder; and
providing, by an audio output component of the computing device, the enhanced version of the audio waveform.

2. The computer-implemented method of claim 1, wherein the neural network is a symmetric encoder-decoder network with skip connections.

3. The computer-implemented method of any of claims 1 or 2, further comprising:
initially training the neural network based on the ground truth sample and the training dataset.

4. The computer-implemented method of claim 3, wherein the initial training of the neural network is performed on one or more of adaptive multi-rate narrowband (AMR-NB), adaptive multi-rate wideband (AMR-WB), Voice over Internet Protocol (VoIP), or Enhanced Voice Services (EVS) codecs.

5. The computer-implemented method of any one of claims 1-4, wherein the neural network utilizes an exponential linear unit (ELU) function.

6. The computer-implemented method of claim 1, wherein the enhanced version of the audio waveform comprises a waveform with an audio frequency range that was removed during compression by the audio encoder; or
wherein the enhanced version of the audio waveform comprises a waveform with a reduced number of one or more speech artifacts that were introduced during the compression by the audio encoder.

7. The computer-implemented method of claim 1, wherein the enhanced version of the audio waveform comprises a waveform with a reduced amount of signal noise, and wherein the signal noise was introduced during the compression by the audio encoder; or
wherein the audio waveform comprises audio at a first frequency bandwidth, and the enhanced version of the audio waveform comprises a second frequency bandwidth greater than the first frequency bandwidth.

8. The computer-implemented method of any one of claims 1-7, wherein the audio waveform comprises one or more frequency bandwidths, and the enhanced version of the audio waveform comprises enhanced audio content in at least one frequency bandwidth of the one or more frequency bandwidths.

9. The computer-implemented method of any one of claims 1-8, further comprising:
adjusting the enhanced version of the audio waveform based on a user profile.

10. The computer-implemented method of claim 9, further comprising:
receiving, via a display component of the computing device, a user indication of the user profile.

11. The computer-implemented method of any of claims 1-10, wherein the predicting of the enhanced version of the audio waveform further comprises:
obtaining a trained neural network at the computing device; and
applying the trained neural network as obtained to the predicting of the enhanced version of the audio waveform.

12. The computer-implemented method of any of claims 3-11, wherein the initial training of the neural network comprises training the neural network at the computing device.

13. The computer-implemented method of any of claims 3-12, wherein the training dataset comprises decoded audio waveforms that are decoded after transmission over one or more communications networks.

14. A computing device (500), comprising:
a communications network interface;
an audio output component; and
one or more processors (503) operable to perform operations that comprise the computer-implemented method of any one of claims 1-13.

15. An article of manufacture comprising one or more computer readable media having computer-readable instructions stored thereon that, when executed by one or more processors (503) of a computing device (500), cause the computing device to carry out functions that comprise the computer-implemented method of any one of claims 1-13.

## Patentansprüche

1. Computerimplementiertes Verfahren, umfassend:
Empfangen einer komprimierten Version eines Audiodatenrahmens (110) durch eine Rechenvorrichtung und über eine Kommunikationsnetzwerkschnittstelle, wobei die komprimierte Version nach der Übertragung über ein Kommunikationsnetzwerk empfangen wird;
Dekomprimieren der komprimierten Version, um eine Audiowellenform (126) zu extrahieren;
Erkennen, ob die Audiowellenform unter Verwendung eines neuronalen Netzes (118) verbessert werden muss;
wenn bestimmt wird, dass die Audiowellenform verbessert werden muss:
Vorhersagen einer verbesserten Version der Audiowellenform (128) durch Anwenden des neuronalen Netzes auf die Audiowellenform, wobei das neuronale Netz trainiert worden ist auf (i) eine Grundwahrheitsabtastung, die uncodierte Audiowellenformen vor der Kompression durch einen Audiocodierer umfasst, und (ii) einen Trainingsdatensatz, der decodierte Audiowellenformen nach der Komprimierung der uncodierten Audiowellenformen durch den Audiocodierer umfasst; und
Bereitstellen der verbesserten Version der Audiowellenform durch eine Audioausgabekomponente der Rechenvorrichtung.

2. Computerimplementiertes Verfahren nach Anspruch 1, wobei das neuronale Netz ein symmetrisches Codierer-Decoder-Netz mit Skip-Verbindungen ist.

3. Computerimplementiertes Verfahren nach einem der Ansprüche 1 oder 2, ferner umfassend:
initiales Trainieren des neuronalen Netzes basierend auf der Grundwahrheitsabtastung und dem Trainingsdatensatz.

4. Computerimplementiertes Verfahren nach Anspruch 3, wobei das initiale Trainieren des neuronalen Netzes mit einem oder mehreren von adaptiven Multi-Rate-Schmalband- (adaptive multi-rate narrowband, AMR-NB), adaptiven Multi-Rate-Breitband-(adaptive multi-rate wideband, AMR-WB), Voice-over-Internetprotokoll- (Voice over Internet Protocol, VoIP) oder verbesserten Sprachdienst- (Enhanced Voice Services, EVS) Codecs durchgeführt wird.

5. Computerimplementiertes Verfahren nach einem der Ansprüche 1-4, wobei das neuronale Netz eine exponentielle lineare Einheitsfunktion (exponential linear unit, ELU) nutzt.

6. Computerimplementiertes Verfahren nach Anspruch 1, wobei die verbesserte Version der Audiowellenform eine Wellenform mit einem Audiofrequenzbereich umfasst, der während der Komprimierung durch den Audiocodierer entfernt wurde; oder
wobei die verbesserte Version der Audiowellenform eine Wellenform mit einer reduzierten Anzahl von einem oder mehreren Sprachartefakten umfasst, die während der Komprimierung durch den Audiocodierer eingeführt wurden.

7. Computerimplementiertes Verfahren nach Anspruch 1, wobei die verbesserte Version der Audiowellenform eine Wellenform mit einem verringerten Signalrauschen umfasst und wobei das Signalrauschen während der Komprimierung durch den Audiocodierer eingeführt wurde; oder
wobei die Audiowellenform Audio mit einer ersten Frequenzbandbreite umfasst und die verbesserte Version der Audiowellenform eine zweite Frequenzbandbreite umfasst, die größer ist als die erste Frequenzbandbreite.

8. Computerimplementiertes Verfahren nach einem der Ansprüche 1-7, wobei die Audiowellenform eine oder mehrere Frequenzbandbreiten umfasst und die verbesserte Version der Audiowellenform einen verbesserten Audioinhalt in mindestens einer Frequenzbandbreite der einen oder mehreren Frequenzbandbreiten umfasst.

9. Computerimplementiertes Verfahren nach einem der Ansprüche 1-8, ferner umfassend:
Anpassen der verbesserten Version der Audiowellenform basierend auf einem Benutzerprofil.

10. Computerimplementiertes Verfahren nach Anspruch 9, ferner umfassend:
Empfangen einer Benutzerangabe des Benutzerprofils über eine Anzeigevorrichtung der Rechenvorrichtung.

11. Computerimplementiertes Verfahren nach einem der Ansprüche 1-10, wobei das Vorhersagen der verbesserten Version der Audiowellenform ferner Folgendes umfasst:
Erlangen eines trainierten neuronalen Netzes an der Rechenvorrichtung; und
Anwenden des erlangten neuronalen Netzes auf das Vorhersagen der verbesserten Version der Audiowellenform.

12. Computerimplementiertes Verfahren nach einem der Ansprüche 3-11, wobei das initiale Trainieren des neuronalen Netzes das Trainieren des neuronalen Netzes an der Rechenvorrichtung umfasst.

13. Computerimplementiertes Verfahren nach einem der Ansprüche 3-12, wobei der Trainingsdatensatz decodierte Audiowellenformen umfasst, die nach der Übertragung über ein oder mehrere Kommunikationsnetzwerke decodiert werden.

14. Rechenvorrichtung (500), umfassend:
eine Kommunikationsnetzwerkschnittstelle;
eine Audioausgabekomponente; und
einen oder mehrere Prozessoren (503), die betreibbar sind, um Vorgänge durchzuführen, die das Computerimplementierte Verfahren nach einem der Ansprüche 1-13 umfassen.

15. Fertigungsartikel, umfassend ein oder mehrere computerlesbare Medien, die darauf gespeicherte computerlesbare Anweisungen aufweisen, die, wenn sie von einem oder mehreren Prozessoren (503) einer Rechenvorrichtung (500) ausgeführt werden, die Rechenvorrichtung veranlassen, Funktionen durchführen, die das computerimplementierte Verfahren nach einem der Ansprüche 1-13 umfassen.

## Revendications

1. Procédé mis en œuvre par ordinateur, comprenant :
la réception, par un dispositif informatique et via une interface de réseau de communication, d'une version compressée d'une trame de données audio (110), dans lequel la version compressée est reçue après transmission sur un réseau de communication ;
la décompression de la version compressée pour extraire une forme d'onde audio (126) ;
le fait de déterminer, à l'aide d'un réseau neuronal (118), si la forme d'onde audio doit être améliorée ;
après avoir déterminé que la forme d'onde audio doit être améliorée :
la prédiction, en appliquant le réseau neuronal à la forme d'onde audio, d'une version améliorée de la forme d'onde audio (128), dans lequel le réseau neuronal a été entraîné sur (i) un échantillon de vérité terrain comprenant des formes d'onde audio non encodées avant compression par un encodeur audio, et (ii) un ensemble de données d'entraînement comprenant des formes d'onde audio décodées après compression des formes d'onde audio non encodées par l'encodeur audio ; et
la fourniture, par un composant de sortie audio du dispositif informatique, de la version améliorée de la forme d'onde audio.

2. Procédé mis en œuvre par ordinateur selon la revendication 1, dans lequel le réseau neuronal est un réseau encodeur-décodeur symétrique avec connexions de saut.

3. Procédé mis en œuvre par ordinateur selon la revendication 1 ou 2, comprenant également :
l'entraînement initial du réseau neuronal basé sur l'échantillon de vérité terrain et l'ensemble de données d'entraînement.

4. Procédé mis en œuvre par ordinateur selon la revendication 3, dans lequel l'entraînement initial du réseau neuronal est effectué sur un ou plusieurs des codecs suivants : bande étroite à débit multiple adaptatif (AMR-NB), bande large à débit multiple adaptatif (AMR-WB), voix sur protocole Internet (VoIP) ou services vocaux améliorés (EVS).

5. Procédé mis en œuvre par ordinateur selon l'une quelconque des revendications 1 à 4, dans lequel le réseau neuronal utilise une fonction d'unité linéaire exponentielle (ELU).

6. Procédé mis en œuvre par ordinateur selon la revendication 1, dans lequel la version améliorée de la forme d'onde audio comprend une forme d'onde avec une plage de fréquences audio qui a été supprimée lors de la compression par l'encodeur audio ; ou
dans lequel la version améliorée de la forme d'onde audio comprend une forme d'onde avec un nombre réduit d'un ou plusieurs artefacts vocaux qui ont été introduits lors de la compression par l'encodeur audio.

7. Procédé mis en œuvre par ordinateur selon la revendication 1, dans lequel la version améliorée de la forme d'onde audio comprend une forme d'onde présentant une quantité réduite de bruit de signal, et dans lequel le bruit de signal a été introduit lors de la compression par l'encodeur audio ; ou
dans lequel la forme d'onde audio comprend un signal audio dans une première bande de fréquences, et dans lequel la version améliorée de la forme d'onde audio comprend une seconde bande de fréquences supérieure à la première bande de fréquences.

8. Procédé mis en œuvre par ordinateur selon l'une quelconque des revendications 1 à 7, dans lequel la forme d'onde audio comprend une ou plusieurs bandes de fréquences, et dans lequel la version améliorée de la forme d'onde audio comprend un contenu audio amélioré dans au moins une bande de fréquences de l'une ou des plusieurs bandes de fréquences.

9. Procédé mis en œuvre par ordinateur selon l'une quelconque des revendications 1 à 8, comprenant également :
l'ajustement de la version améliorée de la forme d'onde audio en fonction d'un profil utilisateur.

10. Procédé mis en œuvre par ordinateur selon la revendication 9, comprenant également :
la réception, via un composant d'affichage du dispositif informatique, d'une indication utilisateur du profil utilisateur.

11. Procédé mis en œuvre par ordinateur selon l'une quelconque des revendications 1 à 10, dans lequel la prédiction de la version améliorée de la forme d'onde audio comprend également :
l'obtention d'un réseau neuronal entraîné sur le dispositif informatique ; et
l'application du réseau neuronal entraîné, tel qu'obtenu, à la prédiction de la version améliorée de la forme d'onde audio.

12. Procédé mis en œuvre par ordinateur selon l'une quelconque des revendications 3 à 11, dans lequel l'entraînement initial du réseau neuronal comprend l'entraînement du réseau neuronal sur le dispositif informatique.

13. Procédé mis en œuvre par ordinateur selon l'une quelconque des revendications 3 à 12, dans lequel l'ensemble de données d'entraînement comprend des formes d'onde audio décodées qui sont décodées après transmission sur un ou plusieurs réseaux de communication.

14. Dispositif informatique (500), comprenant :
une interface de réseau de communication ;
un composant de sortie audio ; et
un ou plusieurs processeurs (503) capables d'effectuer des opérations qui constituent le procédé mis en œuvre par ordinateur de l'une quelconque des revendications 1 à 13.

15. Article de fabrication comprenant un ou plusieurs supports lisibles par ordinateur comportant des instructions lisibles par ordinateur stockées dessus qui, lorsqu'elles sont exécutées par un ou plusieurs processeurs (503) d'un dispositif informatique (500), amènent le dispositif informatique à exécuter des fonctions comprenant le procédé mis en œuvre par ordinateur selon l'une quelconque des revendications 1 à 13.
